# EUROPEAN PATENT APPLICATION

(11) **EP 4 576 777 A1**
(43) Date of publication of application: **25.06.2025**
(21) Application number: 23876353.6
(22) Date of filing: 23.08.2023
(51) Int. Cl.: H04N 19/44

(54) **VIDEO DECODING METHOD, VIDEO PROCESSING DEVICE, MEDIUM, AND PRODUCT**

(30) Priority: 14.10.2022 CN 202211263037
(71) Applicant: ZTE Corporation, Shenzhen, Guangdong 518057 (CN)
(72) Inventor: BAI, Yaxian, Shenzhen, Guangdong 518057 (CN); GU, Chengming, Shenzhen, Guangdong 518057 (CN); ZHOU, Yi, Shenzhen, Guangdong 518057 (CN); ZOU, Wenjie, Shenzhen, Guangdong 518057 (CN); HUANG, Cheng, Shenzhen, Guangdong 518057 (CN)
(74) Representative: Aipex B.V.
(86) International application number: PCT/CN2023/114456
(87) International publication number: WO 2024/078148

(57) **Abstract**

Provided are a video decoding method, a video processing device, a computer-readable storage medium, and a computer program product. The video decoding method includes acquiring reference frame information of a to-be-decoded video frame; determining a reference picture list of the to-be-decoded video frame based on the reference frame information and supplementary frame information; and decoding the to-be-decoded video frame based on the reference picture list to obtain a first reconstructed picture and a decoded picture of the to-be-decoded video frame.

## Description

### CROSS-REFERENCE TO RELATED APPLICATION(S)

This application claims priority to Chinese Patent Application No. 202211263037.4 filed Oct. 14, 2022, the disclosure of which is incorporated herein by reference in its entirety.

### TECHNICAL FIELD

Embodiments of the present application relate to the field of video processing technology, particularly a video decoding method, a video processing device, a computer-readable storage medium, and a computer program product.

### BACKGROUND

With the continuous development of neural networks (NNs), their nonlinear fitting ability has become stronger. As a result, video processing techniques based on neural networks are widely applied in video processing such as video encoding and video decoding.

In the related art, NN-based loop filtering is one of the effective ways to improve video encoding and decoding performance. The selection and correction of both neural network filtering modes and traditional filtering modes are done on a block-by-block basis. The overall performance of pictures obtained through this method may be good, but there are instances where local performance deteriorates, leading to local distortion. Moreover, distortion in reference frames can easily cause error propagation. Additionally, during an inter-frame prediction process, some video frames have repeated reference frames in their reference picture lists, lacking diversity, leading to a poor inter-frame prediction performance. Therefore, it is urgent to discuss and solve how to improve the video picture quality in video processing.

### SUMMARY

Embodiments of the present application provide a video decoding method, a video processing device, a computer-readable storage medium, and a computer program product to improve the video picture quality.

In a first aspect, an embodiment of the present application provides a video decoding method. The video decoding method includes acquiring reference frame information of a to-be-decoded video frame; determining a reference picture list of the to-be-decoded video frame based on the reference frame information and supplementary frame information; and decoding the to-be-decoded video frame based on the reference picture list to obtain a first reconstructed picture and a decoded picture of the to-be-decoded video frame.

In a second aspect, an embodiment of the present application provides a video decoding method. The video decoding method is applied to a video frame that includes a temporal layer identifier. The video decoding method includes, in response to a temporal layer identifier of a to-be-decoded video frame being less than a preset threshold, performing the video decoding method of the first aspect.

In a third aspect, an embodiment of the present application provides a video processing device. The video processing device includes a memory, a processor, and a computer program stored on the memory and executable by the processor. When executing the computer program, the processor performs the video decoding method of the first aspect or the second aspect.

In a fourth aspect, an embodiment of the present application provides a computer-readable storage medium having computer-executable instructions stored thereon for performing the video decoding method of the first aspect or the second aspect.

In a fifth aspect, an embodiment of the present application provides a computer program product. The computer program product includes a computer program or computer instructions stored on a computer-readable storage medium. When a processor of a computing device reads the computer program or the computer instructions from the computer-readable storage medium and executes the computer program or the computer instructions, the computing device is caused to perform the video processing device method of the first aspect or the second aspect.

### BRIEF DESCRIPTION OF DRAWINGS

FIG. 1 is a flowchart of video encoding in the relate art.
FIG. 2 is a flowchart of video encoding in the relate art.
FIG. 3 is a flowchart of loop filtering in the relate art.
FIG. 4 is a configuration diagram of random access video encoding in the relate art.
FIG. 5 is a configuration diagram of low-delay B video encoding in the relate art.
FIG. 6 is a flowchart of video encoding based on NN encoding in the relate art.
FIG. 7 is a flowchart of video decoding based on NN encoding in the relate art.
FIG. 8 is a diagram of a system architecture for an application scenario of a video decoding method according to an embodiment of the present application.
FIG. 9 is a flowchart of a video decoding method according to an embodiment of the present application.
FIG. 10 is a flowchart of a video decoding method according to an embodiment of the present application.
FIG. 11 is a diagram of reference frames inserted in different positions in an example of the present application.
FIG. 12 is a flowchart of replacing a reference frame in an example of the present application.
FIG. 13 is a flowchart of storing a luma component into a decoded picture buffer in an example of the present application.
FIG. 14 is a flowchart of video decoding in an example of the present application.
FIG. 15 is a flowchart of video decoding in an example of the present application.
FIG. 16 is a diagram illustrating the structure of a video processing device according to an embodiment of the present application.

### DETAILED DESCRIPTION

To make the objectives, technical solutions, and advantages of the present application clearer, the following describes the present application in detail in conjunction with the drawings and embodiments. It is to be understood that the embodiments described herein are intended to explain the present application, not to limit the present application.

Although functional modules are divided in device schematic diagrams and logical sequences are illustrated in flowcharts, in some cases, steps illustrated or described may be performed in sequences different from those in divided modules in the device or in the flowcharts. Terms such as "first" and "second" in the description, claims, and drawings of the present application are used to distinguish between similar objects and are not necessarily used to describe a particular order or sequence.

The description of embodiments of the present application, unless otherwise explicitly specified, should interpret terms such as "set" "install", and "connect" in a broad sense. Those skilled in the art may reasonably determine the meaning of these terms in embodiments of the present application in conjunction with the content of the technical solution.

In embodiments of the present application, the term such as "further", "illustratively", or "optionally" indicates example, illustration, or explanation and should not be interpreted as superior to or more advantageous than other embodiments or designs. The use of the term such as "further", "illustratively", or "optionally" is aimed to present relevant concepts in a specific manner.

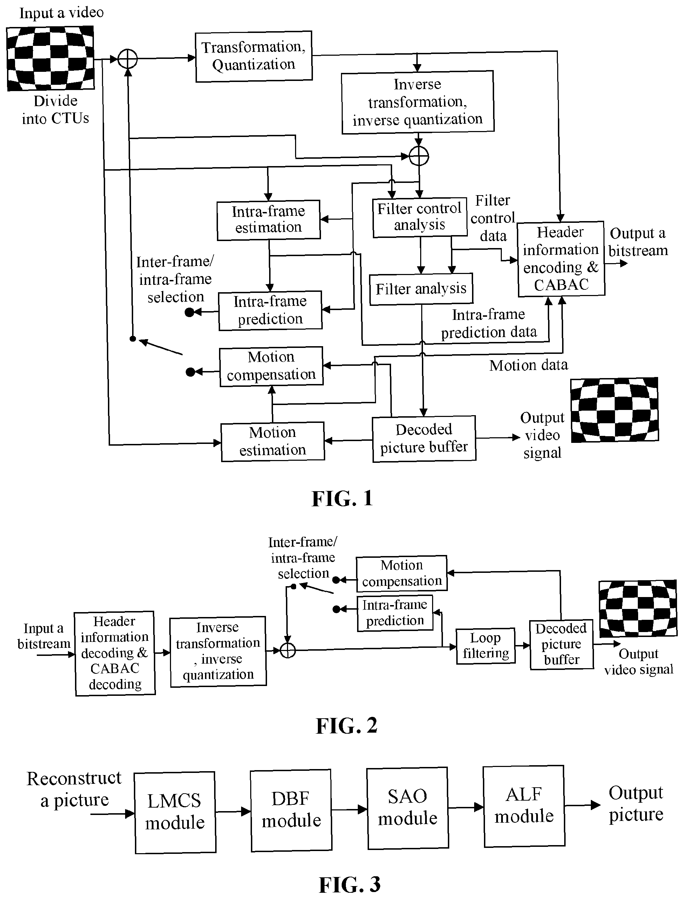

FIG. 1 is a flowchart of video encoding in the relate art. As shown in FIG. 1, the encoding framework of the new-generation video encoding standard H.266/VVC, developed by the ITU-T and ISO/IEC Joint Video Project, includes function modules such as intra-frame prediction, inter-frame prediction, transformation, quantization, loop filtering, and entropy coding modules. The involved video encoding process includes at least the following.

In S101, an input video frame picture is divided into blocks to form coding tree units (CTUs).

In S102, the CTUs are sent to an intra/inter-frame prediction module for predictive encoding. The intra-prediction module is primarily used to remove spatial correlation of the picture by predicting the current pixel block by using the encoded reconstructed block information to remove spatial redundancy. The inter-frame prediction module is primarily used to remove temporal correlation of the picture by using the encoded picture as the reference picture of the current frame to obtain motion information of each block to eliminate temporal redundancy.

In S103, subtraction is performed between the prediction value and the original block to obtain a residual value. The residual value is transformed and quantized so that frequency-domain correlation is removed and lossy compression is achieved. Transform encoding converts the picture from the spatial domain signal to the frequency domain signal, concentrating the energy in the low-frequency region. The quantization module can reduce the dynamic range of the picture encoding.

In S104, all encoding parameters and the residual value are entropy encoded to form a binary stream for storage or transmission. The output data from the entropy encoding module is the compressed bitstream of the original video.

In S105, the prediction value and the inversely quantized and inversely transformed residual value are summed up to obtain a block reconstruction value to form a reconstructed picture.

In S106, the reconstructed picture undergoes a filtering operation by a loop filter and is stored in a picture buffer to serve as a reference picture for future use. In H.266/VVC, loop filtering techniques include luma mapping with chroma scaling (LMCS), deblocking filtering (DBF), sample adaptive offset (SAO), and adaptive loop filtering (ALF). LMCS can improve the compression efficiency by reallocating codewords within the dynamic range. DBF can reduce the blocking effect. SAO can improve the ringing effect. ALF can reduce decoding errors.

FIG. 2 is a flowchart of video encoding in the relate art. As shown in FIG. 2, the video decoding process includes at least the following.

In S201, a bitstream is parsed to obtain a prediction mode and a prediction value.

In S202, the residual value obtained from the bitstream parsing is inversely transformed and inversely quantized.

In S203, the prediction value and the inversely-quantized and inversely-transformed residual value are summed up to obtain a block reconstruction value to form a reconstructed picture.

In S204, the reconstructed picture undergoes a filtering operation by a loop filter and is stored in a picture buffer to serve as a reference picture for future use.

FIG. 3 is a flowchart of loop filtering in the relate art. As shown in FIG. 3, the reconstructed picture passes through the LMCS module, DBF module, SAO module, and ALF module in sequence. The LMCS module can piecewise linearly change the dynamic range of the input video signal amplitude distribution before encoding to improve the encoding efficiency and reversely restore it at the decoder. The DBF module uses a longer filter and a luma adaptive filtering mode designed specifically for high-dynamic videos. The SAO module can reduce the loss of high-frequency components without reducing the encoding efficiency and can compensate for the ringing area from the pixel domain. The ALF module uses a diamond filter based on luma and chroma and selects one filter from multiple filters passed for each block.

With the continuous development of neural networks (NNs), their nonlinear fitting capability has become increasingly powerful. Since neural networks can learn the mapping relationship between the original domain and the reconstructed domain, NN-based video encoding is considered as the future direction in the field of video encoding. NN-based loop filtering is one of the effective ways to enhance the encoding performance. Currently, NNVC, which is based on the next-generation video encoding standard H.266/VVC, supports two network structures. The switching, enabling, and disabling of these two networks can be controlled by syntax elements in the sequence parameter set (SPS).

An input video frame is a basic unit that constitutes a video. A video sequence may include multiple video frames. An input video frame may be a real-time captured frame, for example, a video frame acquired by the camera of a terminal in real time, or may be a video frame that corresponds to a stored video. An input video frame may be an I-frame, P-frame, or B-frame. The I-frame is an intra-frame predicted frame. The P-frame is a forward predicted frame. The B-frame is a bidirectional predicted frame.

A reference frame is a video frame used as a reference when a to-be-decoded video frame is encoded. A reference frame is a video frame obtained by reconstructing encoded data of a video frame that can serve as a reference frame. Depending on the type of inter-frame prediction, a reference frame of a to-be-decoded video frame may be a forward reference frame or a bidirectional reference frame. A to-be-encoded video frame corresponds to one or more current reference frames. For example, a P-frame as a to-be-encoded video frame corresponds to one reference frame, and a B-frame as a to-be-encoded video frame corresponds to two reference frames. A reference frame of a to-be-encoded video frame may be determined based on a reference relationship that may vary with different video encoding or decoding standards.

Reference frame management is a key technology in video encoding. Reference frame management primarily involves managing a decoded picture buffer (DPB) and selecting the optimal reference scheme to create a reference picture queue. The DPB is a buffer used in video encoding to store decoded pictures. To eliminate temporal redundancy, the current encoded frame may use a decoded picture in the DPB as a reference frame. By inter-frame prediction, only an inter-frame prediction residual value is transmitted, thereby improving the encoding efficiency.

Further, the list storing a forward reference frame of the current frame is referred to as a forward reference picture list L0, also called a first reference picture list in embodiments of the present application; and the list storing a backward reference frame of the current frame is referred to as a backward prediction reference picture list L1, also called a second reference picture list in the embodiments of the present application. If a to-be-decoded video frame is a unidirectional predicted frame, then only the L0 list is a candidate list. If a to-be-decoded video frame is a bidirectional predicted frame, both L0 and L1 are candidate lists.

In a video encoding process, a reference frame of each frame is usually determined based on encoding configuration. The distance between a reference frame in L0/L1 and the current frame is indicated through reference_pictures_L0/L1. The maximum number of reference frames in L0/L1 that can be used by the current frame is indicated through ref_pics_L0/L1. The number of reference frames available in L0/L1 is indicated through ref_pics_active_L0/L1. The encoder transmits the POC of a reference frame of each frame into a bitstream.

At the video decoder, the bitstream is parsed to obtain a reference frame of the current frame.

Common video encoding configuration includes random access (RA) configuration and low-delay B configuration.

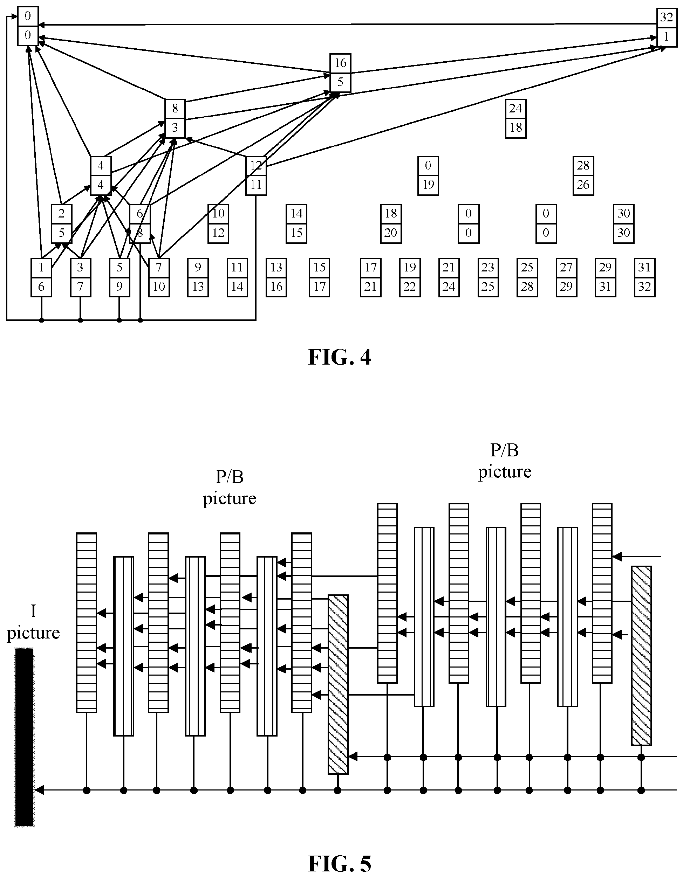

FIG. 4 is a configuration diagram of random access video encoding in the relate art. As shown in FIG. 4, each rectangle in the figure represents a frame, carrying reference frame information and an encoding/decoding number. The reference frame information may be a picture order count (POC), indicating the playback order of video frames after decoding. The encoding/decoding number represents the order of video frames in the encoding/decoding process. For example, the P-frame whose POC is 32 is a forward-predicted frame, with its corresponding reference frame being the I-frame whose POC is 0; the B-frame whose POC is 16 is a bidirectional predicted frame, corresponding to two reference frames: the I-frame whose POC is 0 and the P-frame whose POC is 32, and so on.

FIG. 5 is a configuration diagram of low-delay B video encoding in the relate art. As shown in FIG. 5, the first encoded picture is an I-frame, and the remaining encoded pictures are either B-frames or P-frames, which only have reference pictures from previous frames in display order. The display order of the pictures is the same as the decoding order. The arrows represent the reference relationships between pictures, pointing to the reference pictures. Each frame only references reconstructed frames that precede the current encoded picture in playback order. This video sequence is encoded and decoded according to the playback order, eliminating the need to wait for frames that follow the current picture in encoding order but precede it in display order. This results in a relatively lower latency, making this low-latency structure suitable for scenarios with high latency requirements, such as live streaming and video calls.

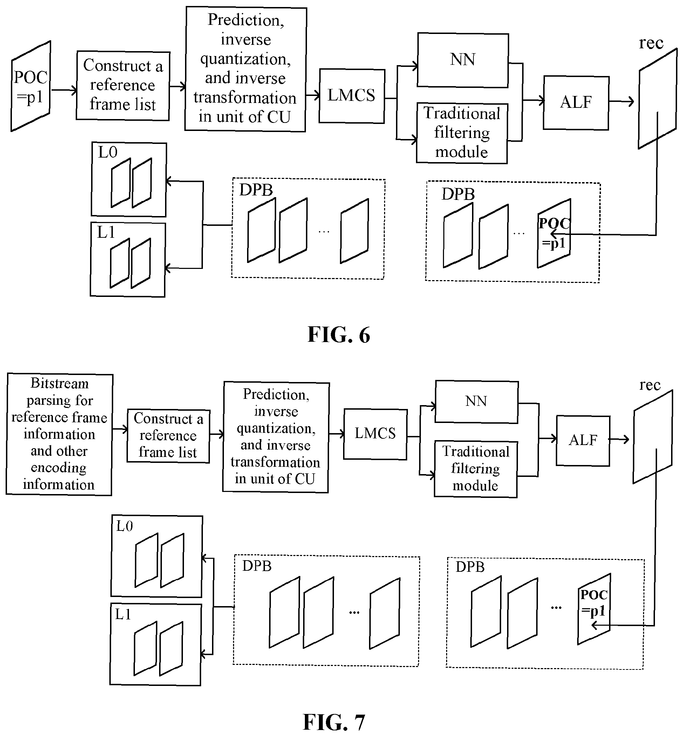

FIG. 6 is a flowchart of video encoding based on NN encoding in the relate art. As shown in FIG. 6, the video encoding process includes at least the following.

In S301, a reference frame list is constructed, and the encoder constructs reference lists L0 and L1 based on reference frame POC differences indicated in cfg. Here a reference frame may be marked as a "short-term reference frame", "non-reference frame", or "long-term reference frame".

In S302, in a unit of CU, prediction, transformation, quantization, inverse quantization, and inverse transformation are performed to obtain reconstructed blocks.

In S303, after frame-level prediction is completed, the LMCS step is performed.

In S304, the LMCS-reconstructed picture undergoes traditional filtering.

In S305, the LMCS-reconstructed picture undergoes NN filtering.

In S306, NN filtering and traditional filtering are adapted and corrected based on the original picture, and the correction-related syntax elements are determined.

In S307, the NN-filtered corrected frame undergoes an ALF operation.

In S308, the current frame is marked as a "short-term reference frame" and stored in the DPB.

FIG. 7 is a flowchart of video decoding based on NN encoding in the relate art. As shown in FIG. 7, the video decoding process includes at least the following.

In S401, a reference frame list is constructed, and the encoder constructs reference lists L0 and L1 based on reference frame POC differences indicated in cfg. Here a reference frame may be marked as a "short-term reference frame", "non-reference frame", or "long-term reference frame".

In S402, in a unit of CU, prediction, transformation, quantization, inverse quantization, and inverse transformation are performed to obtain reconstructed blocks.

In S403, after frame-level prediction is completed, the LMCS is performed.

In S404, the blocks in the LMCS-reconstructed picture undergo traditional filtering based on the parsed result from the bitstream.

In S405, the blocks in the LMCS-reconstructed picture undergo NN filtering based on the parsed result from the bitstream.

In S406, NN filtering and traditional filtering are adapted based on the parsed result from the bitstream.

In S407, the NN-filtered corrected frame undergoes an ALF operation.

In S408, the current frame is marked as a "short-term reference frame" and stored in the DPB.

In the related art, the model parameters of the NN filtering module may either be preset or transmitted via the bitstream. Current NN filtering networks are typically offline networks, trained on large datasets in an offline manner. When encoding video pictures, the output of the NN filter may sometimes outperform traditional filtering methods, but in some cases, the NN-filtered picture may perform worse than a picture filtered using traditional methods at certain pixels. To address this, NN-based video encoding typically combines the NN-filtered picture and the reconstruction values from traditional filtering to correct the output. This correction is based on the original picture, resulting in a balanced filtering effect, and the correction-related information is written into the bitstream and transmitted to the decoder.

In the existing NN correction process, the selection and correction between NN filtering and traditional filtering are handled on a block-by-block basis. To save space in the bitstream, larger blocks are typically used, such as 64x64, 128x128, or 256x256. While this approach may provide a better overall performance for a block, it can lead to poor performance in specific regions. In inter-frame prediction structures, the corrected reconstructed frames are used as reference frames for subsequent frames. Two issues remain unresolved: First, the picture processed by the NN filter may exhibit local distortions, which can cause error propagation; second, in inter-frame prediction, some reference picture lists may contain duplicate frames, leading to a lack of diversity and poor prediction results.

To address these issues, the present application provides a video decoding method, a video processing device, a computer-readable storage medium, and a computer program product. The video decoding method, based on a hybrid coding framework, provides reference frames processed with various loop filtering methods for use by subsequent frames. This method increases the diversity of reference frames, thereby improving the quality of details and overall video picture quality.

The following provides a further explanation of embodiments of the present application with reference to drawings.

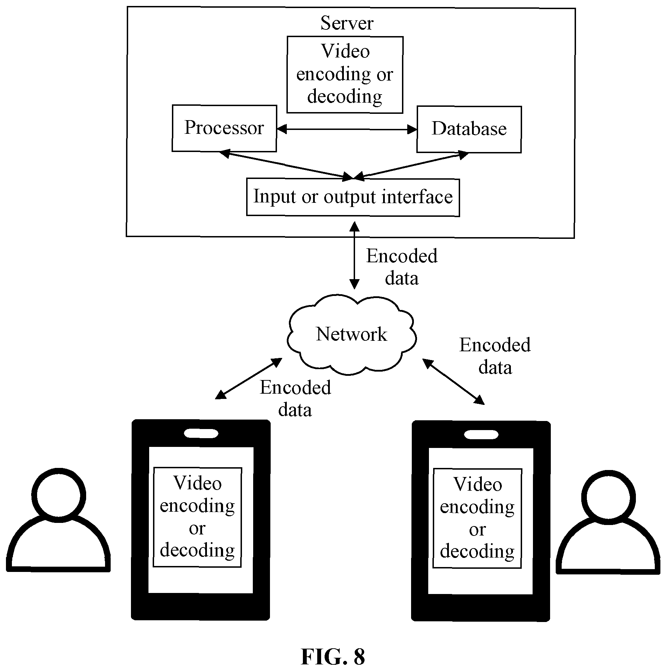

FIG. 8 is a diagram of a system architecture for an application scenario of a video decoding method according to an embodiment of the present application. As shown in FIG. 8, in the application scenario, there are a terminal 110 and a server 120. The terminal 110 or the server 120 may perform video encoding through an encoder or video decoding through a decoder. The terminal 110 or the server 120 may also use a processor to run a video encoding program to encode a video or run a video decoding program to decode a video. After receiving the encoded data sent from the terminal 110 via an input interface, the server 120 may directly pass the data to the processor for decoding or store it in a database for later decoding. After the server 120 encodes the original video frames into encoded data via the processor, it can either send the encoded data directly to the terminal 110 via an output interface or store it in a database for future transmission.

The video decoding method may be performed either by the terminal 110 or the server 120. The terminal 110 may encode the input video frames using a video encoding method and then send the encoded data to the server 120, or it can receive the encoded data from the server 120 and decode it to generate the decoded video frames. The server 120 may encode the video frames; in this case, the video encoding method is performed at the server 120. If the server 120 is required to decode the encoded data, the video decoding method is executed at the server 120. Of course, after the server 120 receives the encoded data sent from the terminal 110, it can send the encoded data to the corresponding receiving terminal for decoding. It can be understood that the encoder and the decoder may be the same device or different devices. The computing device, such as the terminal or the server, may function as either the encoder or the decoder.

The terminal 110 and the server 120 are connected via a network. The terminal 110 of any embodiment of the present application may be a device related to picture and video playback, such as a mobile phone, tablet, computer, laptop, wearable device, in-vehicle device, LCD display, CRT monitor, holographic display, or projector. This is not limited in embodiments of the present application. The server 120 can be implemented using an independent server or a server cluster composed of multiple servers.

It is to be noted that the video decoding method of any embodiment of the present application is based on an NN-based video encoding framework. Therefore, the flow architecture referenced in FIG. 6 or FIG. 7 can be applied, and further details are not repeated here.

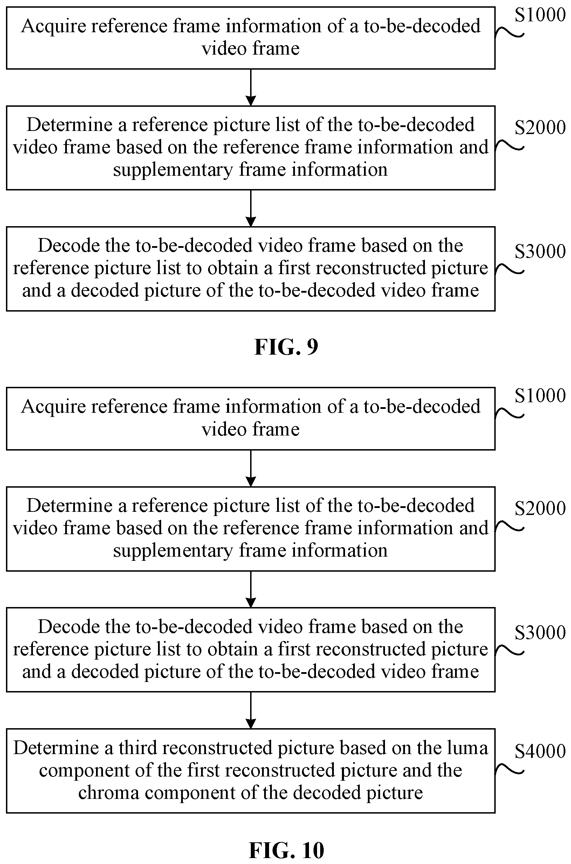

FIG. 9 is a flowchart of a video decoding method according to an embodiment of the present application. As shown in FIG. 9, the video decoding method is applied to a video processing device. In the embodiment of FIG. 9, the video decoding method may include, but is not limited to, S1000, S2000, and S3000.

In S 1000, reference frame information of a to-be-decoded video frame is acquired.

In an embodiment, by parsing the video encoding bitstream, the reference frame information corresponding to the to-be-decoded video frame is obtained. The reference frame information includes a POC of a reference frame. For example, if the to-be-decoded video frame has only one reference frame, the reference frame information includes a POC that indicates the position of the reference frame. Using the example shown in FIG. 4, suppose that the frame corresponding to POC 32 is the current frame and the frame corresponding to POC 0 is the reference frame for the current frame. In this case, the current frame has only one reference frame, which is the frame corresponding to POC 0. Accordingly, the reference frame information includes POC = 0.

In another embodiment, by parsing the video encoding bitstream, the reference frame information corresponding to the to-be-decoded video frame is obtained. The reference frame information includes POCs of multiple reference frames. For example, if the to-be-decoded video frame has two reference frames, the reference frame information includes two POCs, each indicating the position of a reference frame. Using the example shown in FIG. 4, suppose that the frame corresponding to POC 16 is the current frame, and the frames corresponding to POC 0 and POC 32 are both reference frames for the current frame. In this case, the current frame has two reference frames: the frame corresponding to POC 0 and the frame corresponding to POC 32. Accordingly, the reference frame information includes POC = 0 and POC = 32.

The reference frame is used to reconstruct the to-be-decoded video frame. The reference frame information can also include information other than the POC, such as other data that represents the picture playback order or the playback position of the picture, which is not limited in this embodiment.

It can be understood that the reference frame may be a forward frame of the current frame, a backward frame of the current frame, or may include both the forward and backward frames of the current frame. One or more reference frames are available.

In S2000, a reference picture list of the to-be-decoded video frame is determined based on the reference frame information and supplementary frame information.

In an embodiment, based on the reference frame information, the frame position of the reference frame corresponding to the to-be-decoded video frame is determined. Specifically, the frame position of the reference frame corresponding to the to-be-decoded video frame is determined based on the POC of the reference frame. Then, based on the supplementary frame information isInsertFlag, the picture corresponding to the reference frame is determined. That is, the frame position of the reference frame is determined based on its POC, and the picture corresponding to the reference frame is determined based on isInsertFlag. Finally, based on this information, the corresponding picture is found or extracted from the picture buffer. Through this method, all pictures corresponding to the reference frame of the to-be-decoded video frame can be determined, thus forming the reference picture list.

In one feasible implementation, the reference frame information corresponding to the to-be-decoded video frame is obtained by parsing the video encoding bitstream.

For example, suppose that the frame corresponding to POC 16 is the current frame, and the frames corresponding to POC 0 and POC 32 are reference frames for the current frame. By parsing the video encoding bitstream, the reference frame information for the current frame is obtained, including POC = 0 and POC = 32. Then, based on isInsertFlag, the pictures corresponding to the frame positions of POC=0 and POC=32 are found. For instance, isInsertFlag = 0 and isInsertFlag = 1. Different picture sublists can be constructed for different POCs, such as the first reference picture list L0 = {POC = 0, isInsertFlag = 0, isInsertFlag=1} and the second reference picture list L1 = {POC = 32, isInsertFlag = 0, isInsertFlag=1}. The reference picture list includes both the first reference picture list and the second reference picture list.

The first reference picture list L0 and the second reference picture list L1 may be defined in different manners. For example, pictures corresponding to reference frames with POC smaller than the POC of the to-be-decoded video frame may be assigned to the first reference picture list L0 while pictures corresponding to reference frames with POC larger than the POC of the to-be-decoded video frame may be assigned to the second reference picture list L1. Alternatively, pictures corresponding to reference frames with POC larger than the POC of the to-be-decoded video frame may be assigned to the first reference picture list L0 while pictures corresponding to reference frames with POC smaller than the POC of the to-be-decoded video frame may be assigned to the second reference picture list L1. Other methods of division may also be applied. This is not limited in this embodiment.

By way of example, suppose that the frame corresponding to POC 16 is the current frame, and the frames corresponding to POC 0 and POC 32 are both reference frames for the current frame. All reference frame pictures can be determined based on the reference frame information POC and the supplemental frame information isInsertFlag.

In the process, all reference frame pictures are divided into different decoded pictures based on the isInsertFlag value. By way of example, the pictures with isInsertFlag = 0 are grouped into the first decoded picture. The first decoded picture is further categorized into different reference lists based on the POC. For example, the frame with POC = 0 is assigned to the first reference picture list, that is, first reference picture list L0 = {POC = 0, isInsertFlag = 0}; and the frame with POC = 32 is assigned to the second reference picture list, that is, second reference picture list L1 = {POC = 32, isInsertFlag = 0}. That is, the POC of the first decoded picture is equal to the POC of one of the reference frames, and the supplemental frame information of the first decoded picture is equal to the first supplemental frame information (that is, isInsertFlag = 0).

Further, the pictures with isInsertFlag = 1 are grouped into the second decoded picture. The second decoded picture is also categorized into different reference lists based on the POC. For example, the frame with POC = 0 is assigned to the first reference picture list, and the frame with POC =32 is assigned to the second reference picture list. The second decoded picture may be at different positions of the reference picture list. For example, the second decoded picture may be the first picture of the first reference picture list or the second reference picture list, the last picture of either list, or the second last picture of either list. Alternatively, the position may be configured according to the indication information from the video encoding bitstream. It is also feasible to replace the position of the first decoded picture.

In S3000, the to-be-decoded video frame is decoded based on the reference picture list to obtain a first reconstructed picture and a decoded picture of the to-be-decoded video frame.

In an embodiment, a suitable reference picture is selected from the reference picture list for video processing, such as decoding processing, to obtain the reconstructed or restored picture of the to-be-decoded video frame. At least two reconstructed pictures are obtained, for example, a first reconstructed picture and a decoded picture. The reconstructed pictures, for example, the first reconstructed picture and the decoded picture, are stored in a picture buffer and can be used as reference pictures for the next frame (that is, the current frame on the next occasion) to restore the next frame (that is, the current frame on the next occasion) of picture. The decoded picture can also be used as the output picture.

In another embodiment, to facilitate the identification and distinction of different reconstructed pictures, supplementary frame information may be configured for the reconstructed pictures. For example, first supplementary frame information for the first reconstructed picture may be isInsertFlag = 1, and second supplementary frame information for the decoded picture may be isInsertFlag = 0.

In an embodiment, the first reconstructed picture and the decoded picture are not the same. By way of example, the first reconstructed picture undergoes no loop filtering process while the decoded picture undergoes a loop filtering process. The loop filtering process may include deblocking loop filtering (DBF), sample adaptive offset (SAO) loop filtering, luma mapping with chroma scaling (LMCS), neural-network-based loop filtering (NNF), and adaptive loop filtering (ALF).

In another embodiment, the first reconstructed picture and the decoded picture each undergo a loop filtering process different from each other. For example, the first reconstructed picture undergoes LMCS while the decoded picture undergoes LMCS, DBF, SAO, NNF, and ALF. The first reconstructed picture and the decoded picture may undergo different loop filtering processes, which is not limited herein.

The technical solution of this embodiment is applicable not only to to-be-decoded video frames but also to to-be-processed video/picture frames, target video/picture frames, or current video/picture frames.

The selection and correction of NN loop filtering mode and traditional filtering mode are based on a block unit. After NN filtering, the local performance of the picture may deteriorate. If the decoded picture processed by NN loop filtering continues being used as the reference frame for subsequent frames, local distortion may occur. The picture quality of the traditional filtering technique is more stable. According to this embodiment, by storing the first reconstructed picture processed by traditional filtering in the decoded picture buffer as the reference frame, the diversity of reference frames can be increased, and the quality of predicted reconstructed pictures in subsequent frames can be improved.

Since the local detail performance of the traditional-filtering-reconstructed picture after ALF filtering is worse than the traditional-filtering-reconstructed picture without ALF filtering, according to this embodiment, the predicted reconstructed picture quality for subsequent frames can be improved, by storing the reconstructed picture that has not undergone ALF filtering in the decoded picture buffer as the first reconstructed picture so that the reconstructed picture can be used as a reference frame for subsequent frames.

FIG. 10 is a flowchart of a video decoding method according to an embodiment of the present application. As shown in FIG. 10, the video decoding method is applied to a video processing device. In the embodiment of FIG. 10, the video decoding method may include, but is not limited to, S1000, S2000, S3000, and S4000.

The S1000, S2000, and S3000 of the previous embodiment are applicable to this embodiment and are not repeated here.

In S4000, a third reconstructed picture is determined based on the luma component of the first reconstructed picture and the chroma component of the decoded picture.

In an embodiment, the third reconstructed picture is stored in a picture buffer. To facilitate searching and identifying the third reconstructed picture, second supplementary frame information, such as isInsertFlag = 0, is configured for the third reconstructed picture.

An embodiment of the present application provides a video processing method, such as a video decoding method applied to a video frame having a temporal layer identifier. If the temporal layer identifier of a to-be-decoded video frame is less than a preset threshold, the video processing method as described in FIG. 9 or FIG. 10 is applied to the to-be-decoded video frame. For example, as shown in FIG. 4, 32 frames are divided into 6 temporal layers from top to bottom, with the frames at the top belonging to lower temporal layers and the frames at the bottom belonging to higher temporal layers. Since the probability of using a high temporal layer as a reference frame is much smaller the probability of using a low temporal layer as a reference frame, the improvement from storing a DBF-processed reconstructed frame in a high temporal layer is not as significant as in a low temporal layer. Therefore, to use resources efficiently, it is feasible to store DBF-reconstructed frames for lower temporal layer frames whose TL is smaller than the threshold T, thus saving unnecessary storage overhead.

The application process of the video decoding method of this embodiment of the present application is explained in detail by using the following six examples.

### Example one

Since the order of reference frames affects the reference frame ID during transmission and has some impact on the compression result, this example provides an explanation of one type of insertion position.

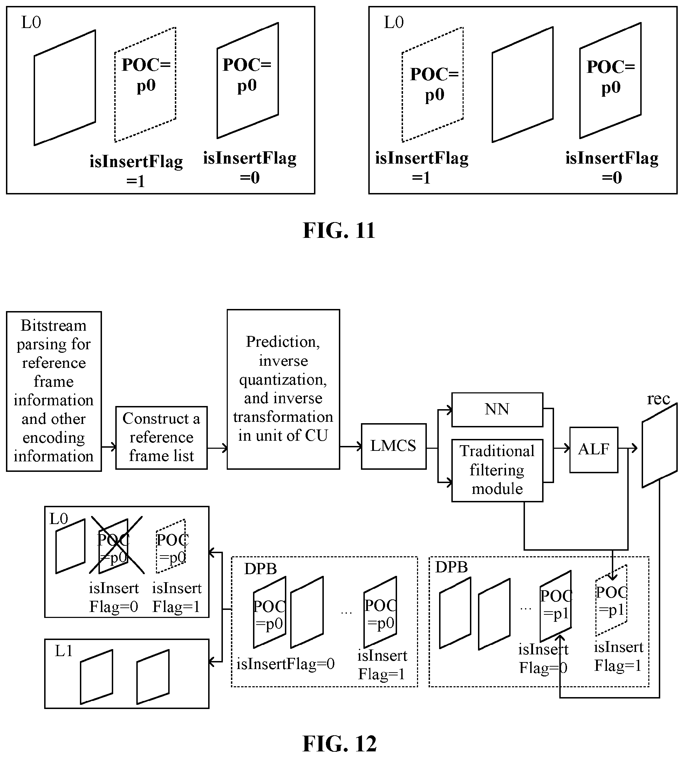

FIG. 11 is a diagram of reference frames inserted in different positions in an example of the present application.

In S501, a reference picture list is constructed.

The decoder obtains picture order counts (POCs) of to-be-decoded video frames by bitstream parsing. Using the POCs, a first reference picture list (L0) and a second reference picture list (L1) are constructed from a decoded picture buffer. The reference picture lists contain first and second decoded pictures. A first decoded picture corresponds to a picture with isInsertFlag = 0. A second decoded picture corresponds to a picture with isInsertFlag = 1.

In this example, reference frames may be labeled as "short-term reference frame", "non-reference frame" or "long-term reference frame".

In S502, if a picture with isInsertFlag = 1 is in the decoded picture buffer, and its corresponding POC is in either L0 or L1, this picture is inserted at various positions. For example, this picture may be the first picture of the first reference picture list or the second reference picture list, the last picture of either list, or the second last picture of either list. Alternatively, the insertion position may be flexibly determined based on certain costs.

In S503, in a unit of CU, prediction, transformation, quantization, inverse quantization, and inverse transformation are performed based on the parsed information from the bitstream to obtain reconstructed blocks.

In S504, after frame-level prediction is completed, the LMCS is performed.

In S505, the blocks in the LMCS-reconstructed picture undergo traditional filtering, the traditional filtering result is stored in the decoded picture buffer, the POC corresponding to the to-be-decoded video frame is recorded, and the supplementary frame information is set as second supplementary frame information.

In S506, the blocks in the LMCS-reconstructed picture undergoes NN filtering based on the parsed result from the bitstream, preparing for the reconstructed frames of subsequent traditional filtering and NN filtering.

In S507, NN filtering and traditional filtering are adapted based on the parsed result from the bitstream.

In S508, the reconstructed frame of S107 undergoes ALF filtering.

In S509, the decoded picture is marked as a "short-term reference frame", the supplementary frame information is set as first supplementary frame information, and the decoded picture is stored in the decoded picture buffer.

### Example two

Since inserting reference frames increases the range of motion search and adds to time complexity, this example changes the operation from inserting reference frames to replacing reference frames, thereby reducing time complexity to some extent.

FIG. 12 is a flowchart of replacing a reference frame in an example of the present application.

In S601, a reference picture list is constructed.

The decoder obtains picture order counts (POCs) of to-be-decoded video frames bybitstream parsing. Using the POCs, a first reference picture list (L0) and a second reference picture list (L1) are constructed from a decoded picture buffer. The reference picture lists contain first and second decoded pictures. A first decoded picture corresponds to a picture with isInsertFlag = 0. A second decoded picture corresponds to a picture with isInsertFlag = 1. Herein, reference frames may be labeled as "short-term reference frame", "non-reference frame" or "long-term reference frame".

In S602, if a picture with isInsertFlag = 1 is in the decoded picture buffer, and its corresponding POC is in either L0 or L1, a reference picture with isInsertFlag = 0 is replaced with the picture with isInsertFlag = 1.

In S603, in a unit of CU, prediction, transformation, quantization, inverse quantization, and inverse transformation are performed based on the parsed information from the bitstream to obtain reconstructed blocks.

In S604, after frame-level prediction is completed, the LMCS is performed.

In S605, the blocks in the LMCS-reconstructed picture undergo DBF filtering, the traditional filtering result is stored in the decoded picture buffer, the POC corresponding to the to-be-decoded video frame is recorded, and the isInsertFlag is set to 1.

In S606, the blocks in the LMCS-reconstructed picture undergoes NN filtering based on the parsed result from the bitstream.

In S607, NN filtering and traditional filtering are adapted based on the parsed result from the bitstream.

In S608, the reconstructed frame of the preceding process undergoes an ALF operation.

In S609, the decoded picture is marked as a "short-term reference frame" and stored in the decoded picture buffer, and isInsertFlag is set to 0 for this picture.

### Example three

Since the probability of using a high temporal layer as a reference frame is much smaller the probability of using a low temporal layer as a reference frame, the improvement from storing a DBF-processed reconstructed frame in a high temporal layer is not as significant as in a low temporal layer. To save storage costs, this example is used in only a low temporal layer.

In S701, a reference picture list is constructed.

The decoder obtains picture order counts (POCs) of to-be-decoded video frames by bitstream parsing. Using the POCs, a first reference picture list (L0) and a second reference picture list (L1) are constructed from a decoded picture buffer. The reference picture lists contain first and second decoded pictures. A first decoded picture corresponds to a picture with isInsertFlag = 0. A second decoded picture corresponds to a picture with isInsertFlag = 1. A reference frame may be marked as a "short-term reference frame", "non-reference frame", or "long-term reference frame".

In S702, if the current temporal layer (TL) is less than the threshold T (T ∈ [0, 5], which can be set as required), it is then determined whether a picture with isInsertFlag = 1 is in the decoded picture buffer, and its corresponding POC is in either L0 or L1; and if a picture with isInsertFlag = 1 is in the decoded picture buffer, and its corresponding POC is in either L0 or L1, the picture is inserted at the end of the corresponding reference picture list.

In S703, in a unit of CU, prediction, transformation, quantization, inverse quantization, and inverse transformation are performed based on the parsed information from the bitstream to obtain reconstructed blocks.

In S704, after frame-level prediction is completed, the LMCS is performed.

In S705, the blocks in the LMCS-reconstructed picture undergo traditional filtering, the traditional filtering result is stored in the decoded picture buffer, the POC corresponding to the to-be-decoded video frame is recorded, and the isInsertFlag is set to 1.

In S706, the blocks in the LMCS-reconstructed picture undergoes NN filtering based on the parsed result from the bitstream.

In S707, NN filtering and traditional filtering are adapted based on the parsed result from the bitstream.

In S708, the reconstructed frame of the preceding process undergoes an ALF operation.

In S709, the decoded picture is marked as a "short-term reference frame" and stored in the decoded picture buffer, and isInsertFlag is set to 0 for this picture.

### Example four

The performance of traditional chroma filtering is much worse than the result of NN filtering, so it is not suitable to use the chroma filtered by the traditional method as a reference frame. Therefore, in this example, only the luma component filtered by the traditional method is stored in the decoded picture buffer while the chroma component is kept as the result from adaptation between NN filtering and traditional filtering.

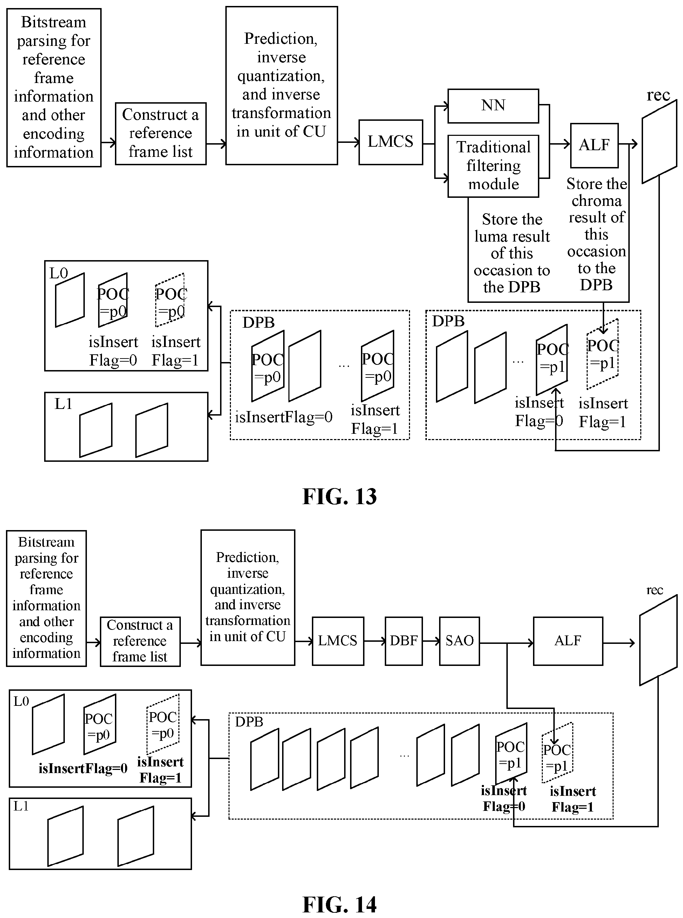

FIG. 13 is a flowchart of storing a luma component into a decoded picture buffer in an example of the present application.

In S801, a reference picture list is constructed.

The decoder obtains picture order counts (POCs) of to-be-decoded video frames by bitstream parsing. Using the POCs, a first reference picture list (L0) and a second reference picture list (L1) are constructed from a decoded picture buffer. The first reference picture list and the second reference picture list constitute a reference picture list. The reference picture list contains first and second decoded pictures. A first decoded picture corresponds to a picture with isInsertFlag = 0. A second decoded picture corresponds to a picture with isInsertFlag = 1. A reference frame may be marked as a "short-term reference frame", "non-reference frame", or "long-term reference frame".

In S802, if a picture with isInsertFlag = 1 is in the decoded picture buffer, and its corresponding POC is in either L0 or L1, the picture is inserted at the end of the corresponding reference picture list.

In S803, in a unit of CU, prediction, transformation, quantization, inverse quantization, and inverse transformation are performed based on the parsed information from the bitstream to obtain reconstructed blocks.

In S804, after frame-level prediction is completed, the LMCS is performed.

In S805, the blocks in the LMCS-reconstructed picture undergo DBF filtering, the traditional filtering result is stored in the decoded picture buffer, the POC corresponding to the to-be-decoded video frame is recorded, and the isInsertFlag is set to 1.

In S806, the blocks in the LMCS-reconstructed picture undergoes NN filtering based on the parsed result from the bitstream.

In S807, NN filtering and traditional filtering are adapted based on the parsed result from the bitstream.

In S808, the reconstructed frame of the preceding process undergoes ALF filtering, the chroma component result is stored in the decoded picture buffer and associated with the POC of the to-be-decoded video frame in S805, and isInsertFlag is set to 1.

In S809, the decoded picture is marked as a "short-term reference frame" and stored in the decoded picture buffer, and isInsertFlag is set to 0 for this picture.

### Example five

FIG. 14 is a flowchart of video decoding in an example of the present application. As shown in FIG. 14, at least the following are included.

In S901, a reference picture list is constructed.

The decoder obtains picture order counts (POCs) of to-be-decoded video frames by bitstream parsing. Using the POCs, a first reference picture list (L0) and a second reference picture list (L1) are constructed from a decoded picture buffer. The reference picture lists contain first and second decoded pictures. A first decoded picture corresponds to a picture with isInsertFlag = 0. A second decoded picture corresponds to a picture with isInsertFlag = 1. A reference frame may be marked as a "short-term reference frame", "non-reference frame", or "long-term reference frame".

In S902, if a picture with isInsertFlag = 1 is in the decoded picture buffer, and its corresponding POC is in either L0 or L1, the picture is inserted at the end of the corresponding reference picture list.

In S903, in a unit of CU, prediction, transformation, quantization, inverse quantization, and inverse transformation are performed based on the parsed information from the bitstream to obtain reconstructed blocks.

In S904, after frame-level prediction is completed, the LMCS is performed.

In S905, the blocks in the LMCS-reconstructed picture undergo DBF filtering, the traditional filtering result is stored in the decoded picture buffer, the POC corresponding to the to-be-decoded video frame is recorded, and the isInsertFlag is set to 1.

In S906, the reconstructed picture from the decoded picture buffer undergoes SAO filtering.

In S907, the picture undergoes an ALF operation.

In S908, the decoded picture is marked as a "short-term reference frame" and stored in the decoded picture buffer, and isInsertFlag is set to 0 for this picture.

### Example six

When multiple neural network (NN) filters are used during video encoding, the pictures modified by different NN filters can be used as reference frames for subsequent frames. This increases the diversity of the reference frames.

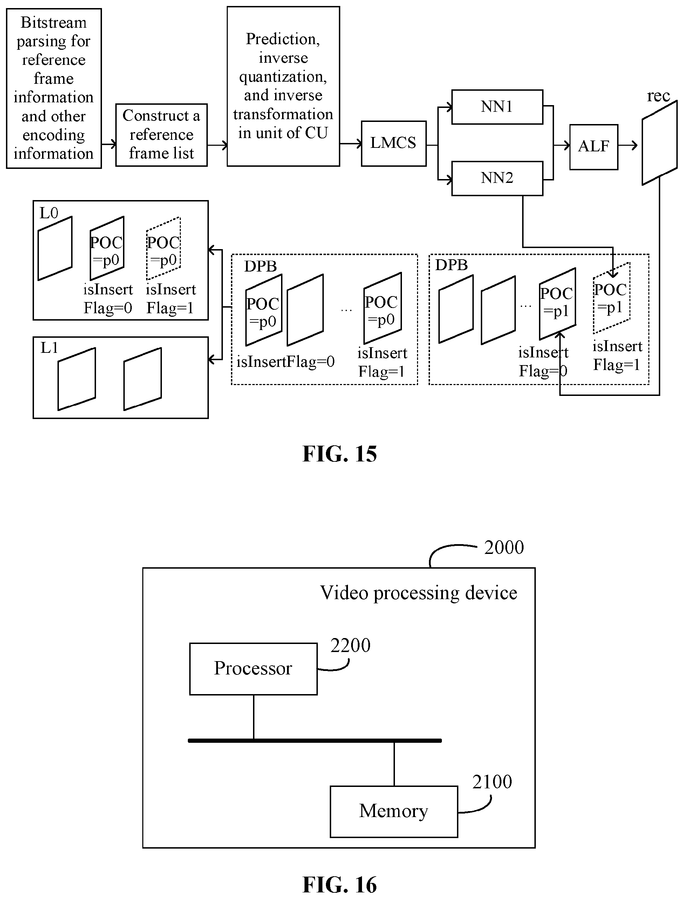

FIG. 15 is a flowchart of video decoding in an example of the present application. As shown in FIG. 15, at least the following are included.

In S1001, a reference picture list is constructed.

The decoder obtains picture order counts (POCs) of to-be-decoded video frames by bitstream parsing. Using the POCs, a first reference picture list (L0) and a second reference picture list (L1) are constructed from a decoded picture buffer. The reference picture lists contain first and second decoded pictures. A first decoded picture corresponds to a picture with isInsertFlag = 0. A second decoded picture corresponds to a picture with isInsertFlag = 1. A reference frame may be marked as a "short-term reference frame", "non-reference frame", or "long-term reference frame".

In S1002, if a picture with isInsertFlag = 1 is in the decoded picture buffer, and its corresponding POC is in either L0 or L1, the picture is inserted at the end of the corresponding reference picture list.

In S1003, in a unit of CU, prediction, transformation, quantization, inverse quantization, and inverse transformation are performed based on the parsed information from the bitstream to obtain reconstructed blocks.

In S1004, after frame-level prediction is completed, the LMCS is performed.

In S1005, the blocks in the LMCS-reconstructed picture are filtered using a first neural network filter NN1 based on the parsed result from the bitstream, the NN1-filtered result is then stored in the decoded picture buffer, the POC corresponding to the to-be-decoded video frame is recorded, and the isInsertFlag is set to 1.

In S1006, the blocks in the LMCS-reconstructed picture are filtered using a second neural network filter NN2 based on the parsed result from the bitstream.

In S1007, the results from the multiple neural network filters (NN1 and NN2) are adapted based on the parsed result from the bitstream.

In S1008, the reconstructed frame of the preceding process undergoes an ALF operation.

In S1009, the decoded picture is marked as a "short-term reference frame" and stored in the decoded picture buffer, and isInsertFlag is set to 0 for this picture.

FIG. 16 is a diagram illustrating the structure of a video processing device according to an embodiment of the present application. As shown in FIG. 16, the video processing device 2000 includes a memory 2100 and a processor 2200. One or more memories 2100 and one or more processors 2200 may be provided. In FIG. 16, one memory 2100 and one processor 2200 are used as an example. The memory 2100 and processor 2200 may be connected by a bus or in other manners.

As a computer-readable storage medium, the memory 2100 may be configured to store software programs, computer-executable programs, and modules, such as program instructions/modules corresponding to the method of any embodiment of the present application. The processor 2200 performs the preceding method by executing the software programs, instructions, and modules stored on the memory 2100.

The memory 2100 may include a program storage region and a data storage region. The program storage region can store an operating system and an application program required by at least one function. Additionally, the memory 2100 may include a high-speed random-access memory and may further include a non-volatile memory such as at least one magnetic disk memory, a flash memory device or another non-volatile solid-state memory. In some examples, the memory 2100 may be remote from the processor 2200 and connectable to the device via a network. Examples of the network include, but are not limited to, the Internet, an intranet, a local area network, a mobile communication network, and a combination thereof.

An embodiment of the present application provides a computer-readable storage medium having computer-executable instructions stored thereon for performing the video processing device method of any previous embodiment of the present application.

Additionally, an embodiment of the present application provides a computer program product. The computer program product includes a computer program or computer instructions stored on a computer-readable storage medium. When a processor of a computing device reads the computer program or the computer instructions from the computer-readable storage medium and executes the computer program or the computer instructions, the computing device is caused to perform the video processing device method of any previous embodiment of the present application.

The system architecture and application scenarios described in embodiments of the present application are intended to more clearly explain the technical solutions of embodiments of the present application and do not limit the technical solutions provided in embodiments of the present application. It can been seen by those skilled in the art that with the evolution of the system architecture and the emergence of new application scenarios, the technical solutions provided in embodiments of the present application is equally applicable to similar technical problems.

It is to be understood by those of ordinary skill in the art that some or all steps of the preceding disclosed method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a CPU, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an EEPROM, a flash memory or other memory technologies, a CD-ROM, a digital video disc (DVD) or other optical storages, a magnetic cassette, a magnetic tape, a magnetic disk or other magnetic storage devices, or any other medium that can be used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

Terms such as "component", "module", and "system" used in this specification refer to computer-related entities, hardware, firmware, combinations of hardware and software, software, or software in execution. For example, a component may be, but is not limited to, a process running on a processor, a processor, an object, an executable file, an execution thread, a program, or a computer. As illustrated, either an application running on a computing device or a computing device can be considered as a component. One or more components may reside in a process or execution thread. The components may be located on a single computer or distributed across two or more computers. Furthermore, these components may be executed from various computer-readable media that store various data structures. The components may communicate with each other via signals based on one or more data packets (for example, data exchanged between two components via interaction with a local system, distributed system, or network, for example, the Internet that exchanges signals with other systems) through local or remote processes.

Some embodiments of the present application are described with reference to the drawings in the preceding and are not intended to limit the scope of the appended claims of the present application. Any modifications, equivalent replacements and improvements made by those skilled in the art without departing from the scope and substantive content of the present application should be within the scope of the present application.

## Claims

1. A video decoding method, comprising:
acquiring reference frame information of a to-be-decoded video frame;
determining a reference picture list of the to-be-decoded video frame based on the reference frame information and supplementary frame information; and
decoding the to-be-decoded video frame based on the reference picture list to obtain a first reconstructed picture and a decoded picture of the to-be-decoded video frame.

2. The video decoding method of claim 1, further comprising:
storing the first reconstructed picture and the decoded picture of the to-be-decoded video frame in a decoded picture buffer and configuring the supplementary frame information for the first reconstructed picture and the decoded picture of the to-be-decoded video frame.

3. The video decoding method of claim 1 or 2, wherein
the first reconstructed picture and the decoded picture are different; and
the first reconstructed picture undergoes no loop filtering process, or, the first reconstructed picture and the decoded picture each undergo a loop filtering process different from each other.

4. The video decoding method of claim 3, wherein the loop filtering process comprises at least one of the following:
deblocking loop filtering (DBF);
sample adaptive offset (SAO) loop filtering;
luma mapping with chroma scaling (LMCS); or
neural-network-based loop filtering (NNF).

5. The video decoding method of any one of claim 1, 2, or 4, wherein acquiring the reference frame information of the to-be-decoded video frame comprises:
parsing a video coded bitstream to obtain the reference frame information of the to-be-decoded video frame, wherein the reference frame information comprises at least one picture order count of at least one reference frame.

6. The video decoding method of claim 5, wherein determining the reference picture list of the to-be-decoded video frame based on the reference frame information and the supplementary frame information comprises:
determining a first reference picture list and a second reference picture list based on the at least one picture order count of the at least one reference frame.

7. The video decoding method of claim 6, wherein
the first reference picture list comprises a first decoded picture; and
the second reference picture list comprises the first decoded picture,
wherein a picture order count of the first decoded picture is equal to one of the at least one picture order count of the at least one reference frame, and supplementary frame information of the first decoded picture is equal to first supplementary frame information.

8. The video decoding method of claim 7, wherein a second decoded picture is further comprised in at least one of the first reference picture list or the second reference picture list, and
wherein a picture order count of the second decoded picture is equal to the picture order count of the first decoded picture, and supplementary frame information of the second decoded picture is equal to second supplementary frame information.

9. The video decoding method of claim 8, wherein the second decoded picture is configured in at least one of the following manners:
the second decoded picture is configured to be a first picture of the first reference picture list or a first picture of the second reference picture list;
the second decoded picture is configured to be a last picture of the first reference picture list or a last picture of the second reference picture list;
the second decoded picture is configured to be a second last picture of the first reference picture list or a second last picture of the second reference picture list;
the second decoded picture is configured to replace the first decoded picture; or
the second decoded picture is configured to be located at a specified position according to indication information of the video coded bitstream.

10. The video decoding method of claim 3, wherein storing a reconstructed picture in the picture buffer and configuring corresponding reference subframe information for the reconstructed picture comprises:
storing the first reconstructed picture and the decoded picture in the decoded picture buffer, configuring first supplementary frame information for the first reconstructed picture, and configuring second supplementary frame information for the decoded picture.

11. The video decoding method of claim 2 or 10, further comprising:
determining a third reconstructed picture based on a luma component of the first reconstructed picture and a chroma component of the decoded picture; and
storing the third reconstructed picture in the picture buffer and configuring second supplementary frame information for the third reconstructed picture.

12. A video decoding method, applied to a video frame that comprises a temporal layer identifier, comprising:
in response to the temporal layer identifier of a to-be-decoded video frame being less than a preset threshold, performing the video decoding method of any one of claims 1 to 11 on the to-be-decoded video frame.

13. A video processing device, comprising a memory, a processor, and a computer program stored on the memory and executable by the processor, wherein when executing the computer program, the processor performs the video decoding method of any one of claims 1 to 12.

14. A computer-readable storage medium having computer-executable instructions stored thereon for performing the video decoding method of any one of claims 1 to 12.

15. A computer program product, comprising a computer program or computer instructions stored on a computer-readable storage medium, wherein when a processor of a computing device reads the computer program or the computer instructions from the computer-readable storage medium and executes the computer program or the computer instructions, the computing device is caused to perform the video decoding method of any one of claims 1 to 12.
